# EUROPÄISCHE PATENTSCHRIFT

(11) **EP 1 288 084 B1**
(45) Veröffentlichungstag und Bekanntmachung des Hinweises auf die Patenterteilung: **16.02.2005**
(21) Anmeldenummer: 02019072.4
(22) Anmeldetag: 28.08.2002
(51) Int. Cl.: B60R 21/20

(54) **Gassackmodul**
Airbag module
Module de coussin gonflable

(30) Priorität: 03.09.2001 DE 20114507 U
(43) Veröffentlichungstag der Anmeldung: 05.03.2003
(73) Patentinhaber: TRW Automotive Safety Systems GmbH, 63743 Aschaffenburg (DE)
(72) Erfinder: Hauer, Constantin, 63825 Schöllkrippen (DE)
(74) Vertreter: Kitzhofer, Thomas, Dipl.-Ing.

(56) Entgegenhaltungen:
- DE-A- 19 749 914
- DE-U- 29 921 745
- US-B1- 6 224 100

## Beschreibung

Die Erfindung betrifft ein Gassackmodul, mit einem Gassack und einer vorderseitigen Abdeckung aus Kunststoff, die einen mittigen Teil und eine diesen umgebende, vorgegebene Austrittsöffnung für den Gassack hat, welche in geschlossenem Zustand von einem ringförmigen Teil der Abdeckung umgeben ist, der beim Entfalten des Gassacks zur Freigabe der Austrittsöffnung entfernt wird, wobei der mittige Teil so am Modul befestigt ist, daß er beim Entfalten des Gassacks an einer freien Bewegung gehindert wird.

Ein derartiges Gassackmodul ist aus der DE 197 49 914 A bekannt. Dabei ist ein Gassack vorgesehen, der im aufgeblasenen Zustand eine dem Insassen zugewandte Vorderseite hat, die in eine zentrische Einbuchtung übergeht, welche dadurch gebildet ist, daß ein mittiger Gassackteil an einer freien Bewegung aus dem Modul gehindert wird. Somit entsteht eine die Einbuchtung umgebende, mit Gas befüllte Kammer. Der mittige Teil der Abdeckung bleibt beim Öffnen der Abdeckung stehen, wird also nicht nach außen geschwenkt oder verlagert. Wichtig ist bei einem Gassackmodul mit feststehendem mittigen Teil, daß dieses sehr stabil und sicher am Rest des Moduls gehalten wird, wenn die Austrittsöffnung freigelegt wird.

Die Erfindung schafft ein Gassackmodul, bei dem die Abdeckung leicht, aber dennoch sehr stabil ausgeführt ist. Dies wird bei einem Gassackmodul der eingangs genannten Art dadurch erreicht, daß ein Verstärkungsring in dem mittigen Teil eingebettet ist und längs des inneren Randes des ringförmigen Teils der Abdeckung angrenzend verläuft und den mittigen Teil der Abdeckung modulseitig befestigt und an einer freien Bewegung beim Entfalten des Gassacks hindert. Durch den Verstärkungsring, der vorzugsweise ein Blechring ist, wird verhindert, daß der Kunststoff im Bereich des mittigen Teiles im Bereich seiner modulseitigen Befestigung ausreißen kann, wenn der Gassack sich entfaltet. Der Verstärkungsring, der modulseitig starr befestigt sein sollte, hält den mittigen Teil zurück, wenn die Abdeckung geöffnet wird. Durch die relativ große Fläche des Ringes ergibt sich keine Gefahr des Ausreißens des Kunststoffs, verglichen beispielsweise mit einer in den Kunststoff eingebetteten Schraube. Der Ring ist zudem am Außenrand des mittigen Teils vorgesehen, also genau in dem Bereich, in dem der Übergang zum ringförmigen Teil vorgesehen ist und in dem, wenn die Abdeckung aufreißen muß, auch eine hohe Belastung in der Abdeckung vorhanden ist. Der Verstärkungsring verhindert in diesem Zusammenhang ein weiteres Aufreißen der Abdeckung. Indem ein Verstärkungsring und keine Scheibe vorgesehen ist, läßt sich erhebliches Material und damit Gewicht sparen, zumal der Verstärkungsring, wie erwähnt, üblicherweise aus Blech ist.

Zunehmend werden auch hochwertig aussehende, aus Metall oder emailliertem Metall bestehende Embleme von Fahrzeugherstellern außenseitig auf die Abdeckung aufgesetzt. Diese Embleme sind separate Teile, die an der Abdeckung befestigt werden müssen. Eine Ausfuhrungsform der Erfindung sieht vor, daß das als separate Teil ausgebildete Emblem wenigstens einen rückseitigen Befestigungsfortsatz hat, der sich durch den mittigen Teil und radial einwärts des Verstärkungsrings erstreckt. Das bedeutet, daß das Emblem nicht am Ring unmittelbar befestigt ist, sondern sich durch das Loch im Ring und den darin befindlichen Kunststoff erstreckt. Bislang wurde angedacht, daß Embleme z.B. unmittelbar an Einlegeblechen oder an rückseitig der Abdeckung anliegenden Konterblechen befestigt werden. Das würde jedoch im vorliegenden Fall bedeuten, daß der Verstärkungsring radial einwärts breiter ausgebildet sein müßte, was auf Kosten des Gewichts ginge. Die bevorzugte Ausführungsform sieht nunmehr vor, daß der Verstärkungsring nicht für diese Aufgabe vorgesehen ist und folglich schmäler auszuführen ist. Indem aber der Verstärkungsring den Befestigungsfortsatz umgibt, besteht keine Gefahr, daß der mittige Teil der Abdeckung beim Öffnen der Austrittsöffnung im Bereich des Befestigungsfortsatzes reißt und die Befestigung des Emblems schwächt. Der Verstärkungsring umgibt somit den Befestigungsfortsatz, ohne direkt mit ihm verbunden zu sein, wie eine Schutzwand.

Der Befestigungsfortsatz wird darüber hinaus gemäß einer bevorzugten Ausführungsform auf der Rückseite des mittigen Teils umgeformt, d.h. das Emblem ist nur am Kunststoff befestigt, so daß keine separaten zusätzlichen Teile zur Befestigung benötigt werden.

Eine andere Ausführungsform sieht vor, daß ein topfförmiger Diffusor im Modul vorgesehen ist, dessen Vorderwand sich zum mittigen Teil der Abdeckung erstreckt. Einerseits kann der Verstärkungsring auf dem Diffusor befestigt sein und andererseits, alternativ oder zusätzlich, kann der Befestigungsfortsatz durch eine Öffnung im Diffusor ragen, um rückseitig umgeformt zu werden, so daß eine formschlüssige Verbindung Diffusor zu Emblem entsteht.

Bevorzugt ist der Gassack ein Ringkammergassack, wie er zuvor bereits erwähnt wurde. Im aufgeblasenen Zustand hat er eine dem Insassen zugewandte Vorderseite, die in eine zentrische Einbuchtung übergeht. Diese ist dadurch gebildet, daß ein rückseitig des mittigen Abschnitts verlaufender mittiger Gassackteil an einer freien Bewegung aus dem Modul heraus gehindert wird. Die Einbuchtung bildet in diesem Zusammenhang keine mit dem eingeblasenen Gas befüllte Kammer.

Vorzugsweise wird der mittige Gassackteil am Modul durch die Befestigung des Verstärkungsrings am Modul befestigt und an der freien Bewegung beim Entfalten des Gassacks gehindert. Der Verstärkungsring hat damit eine Doppelfunktion, indem er einerseits den mittigen Teil der Abdeckung und andererseits den mittigen Gassackteil an einer freien Bewegung aus dem Modul heraus hindert.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine schematische Ansicht des erfindungsgemäßen Gassackmoduls mit aufgeblasenem Gassack,
Figur 2 eine Schnittansicht durch eine erste Ausführungsform des erfindungsgemäßen Gassackmoduls, als Lenkradmodul ausgeführt, und
Figur 3 eine Schnittansicht durch eine zweite Ausführungsform des erfindungsgemäßen Gassackmoduls, ebenfalls als Lenkradmodul ausgeführt.

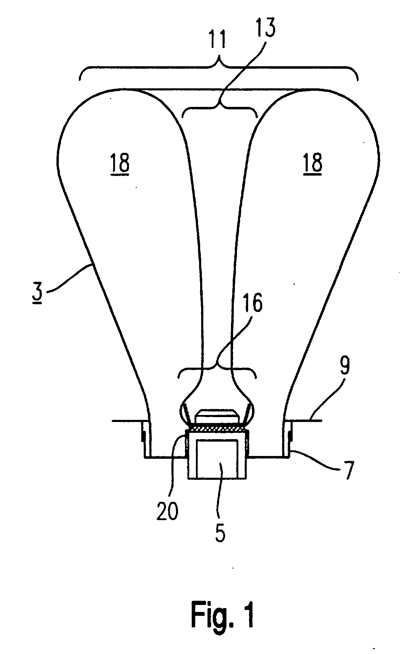

In Figur 1 ist ein im Fahrzeuglenkrad zur Rückhaltung von Kopf und Oberkörper dienendes Gassackmodul gezeigt, das aus einem Gassack 3, einem Gasgenerator 5, einem Modulgehäuse 7, in dem Gassack 3 und Gasgenerator 5 untergebracht sind, und einer vorderseitigen Abdeckung 9 aus Kunststoff besteht.

Der Gassack 3 besteht aus einer Gassackwand aus Gewebematerial, die, bezogen auf den aufgeblasenen Zustand, mehrere Seiten aufweist. Eine Vorderseite 11 ist dem Insassen im aufgelasenen Zustand zugewandt. Die Vorderseite 11 geht in eine zentrische Einbuchtung 13 über, die dadurch gebildet wird, daß ein mittiger Gassackteil 16 modulseitig so befestigt ist, daß er an einer freien Bewegung aus dem Modul heraus gehindert wird, wenn sich der Gassack entfaltet. Es ergibt sich damit eine die Einbuchtung 13 umgebende, mit Gas befüllte ringförmige Kammer 18.

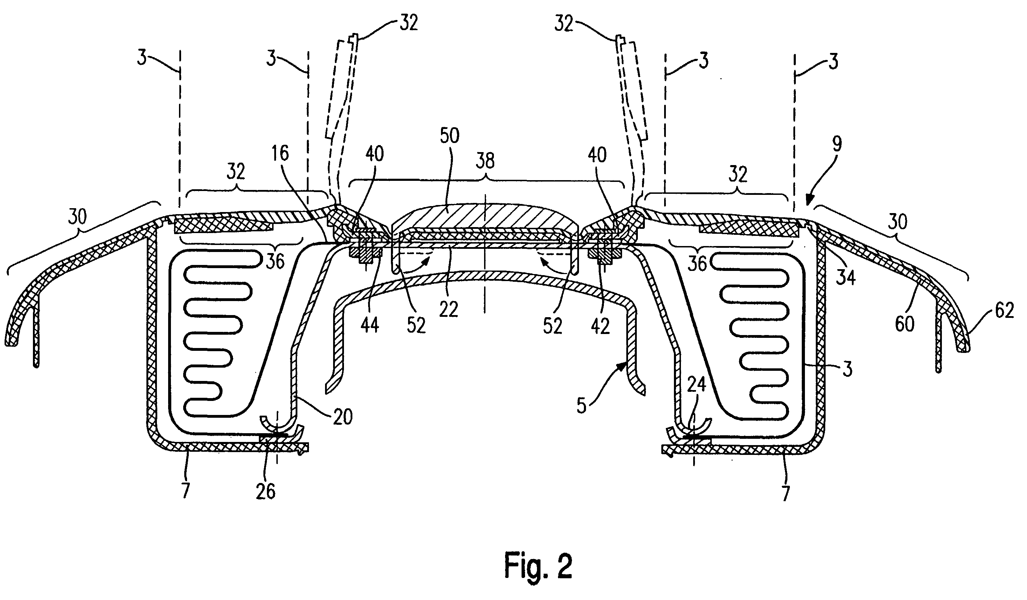

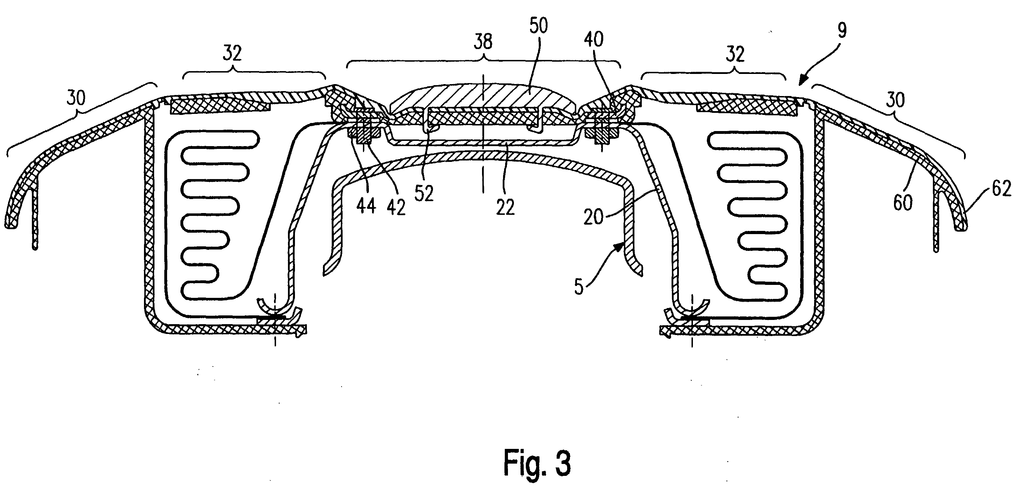

Der Gasgenerator 5 wird von einem topfförmigen Diffusor 20 umgeben, wobei die Vorderwand 22 des Diffusors 20 an die Abdeckung 9 angrenzt (siehe Figuren 2 und 3).

In Figur 2 ist das Modul exakter dargestellt, wobei jedoch der Gasgenerator 5 nur bruchstückhaft wiedergegeben ist. Der Gassack 3 ist an dem Rand seiner Einblasöffnung zwischen einem Flansch 24 des Diffusors 20 und einem verstärkten Boden 26 des Modulgehäuses 7 geklemmt. Der mittige Gassackteil 16 ist zwischen der Vorderwand 22 und der Abdeckung 9 geklemmt und fest am Diffusor 20 und damit am Modul angebracht.

Die Abdeckung 9 aus Kunststoff hat mehrere Abschnitte, nämlich einen äußeren Teil 30, einen ringförmigen Teil 32, der durch eine Materialschwächungslinie 34 vom äußeren Teil 30 begrenzt ist und eine ringförmige Austrittsöffnung 36 für den Gassack verschließt, über den der Gassack 3 aus dem Modul heraustreten kann. Der ringförmige Teil 32 besteht aus Klappen, die radial innenseitig an einem mittigen Teil 38 der Abdeckung 7 einstückig befestigt sind. Der mittige Teil 38 wird im Gegensatz zum ringförmigen Teil 32 beim Entfalten des Gassacks 3 an jeglicher freien Bewegung gehindert, indem er am Diffusor 20 starr befestigt ist. Dazu ist in den mittigen Teil ein vorzugsweise umfangsmäßig geschlossener Verstärkungsring 40 eingebettet, was beim Spritzen oder Schäumen der Abdeckung 9 erfolgt. Der Verstärkungsring 40 ist am Außenrand des mittigen Teils 38 und damit längs des inneren Randes des ringförmigen Teils 32 verlaufend vorgesehen. Rückseitig stehen vom Verstärkungsring 40 mehrere Gewindebolzen 42 ab, die mit dem Verstärkungsring nicht lösbar verbunden sind. Die Gewindebolzen 42 erstrecken sich durch Öffnungen im Gassack 3 und Öffnungen im Diffusor 20. Auf der Rückseite der Vorderwand 22 des Diffusors 20 sind Muttern 44 auf die Gewindebolzen 42 aufgeschraubt. Durch diese Befestigungseinrichtung wird der mittige Teil 38, wie erwähnt, modulseitig befestigt.

Radial einwärts des Verstärkungsrings erstreckt sich von außen sichtbar ein als separates Teil ausgebildetes Emblem 50 aus Metall oder emailliertem Metall. Das Emblem 50 hat rückseitig mehrere Befestigungsfortsätze 52, welche sich durch das mittige Teil 38 der Abdeckung 9 und entsprechende Öffnungen in der Vorderwand 22 erstrecken. Auf der Rückseite der Vorderwand 22 werden die Befestigungsfortsätze 52 bei der Montage des Emblems 50 einwärts gebogen, also umgeformt, so daß das Emblem 50 am mittigen Teil 38 befestigt ist. Es besteht keine unmittelbare Verbindung mit dem Verstärkungsring.

Die Ausführungsform nach Figur 3 entspricht bis auf das im folgenden beschriebene Detail der Ausführungsform nach Figur 2, weshalb funktionsgleiche Teile mit den bereits eingeführten Bezugszeichen versehen werden und nur noch auf den Unterschied zwischen den Ausführungsformen eingegangen werden muß.

Im Gegensatz zur Ausführungsform nach Figur 2 ragen die rückseitigen Befestigungsfortsätze 52 nicht durch die Vorderwand 22, die im Bereich des Emblems 50 eine Einbuchtung hat, sondern nur durch das mittige Teil 38 der Abdeckung 9. Rückseitig sind die Befestigungsfortsätze 52 jedoch umgebogen, so daß eine formschlüssige Verbindung zwischen den Befestigungsfortsätzen 52 und dem Kunststoff, der den mittigen Teil 38 bildet, entsteht.

Alternativ könnte der Verstärkungsring 40 auch an einem anderen beim Entfalten nicht bewegten Teil befestigt sein, beispielsweise am Gasgenerator.

Denkbar ist auch, daß der mittige Teil 38 nur um einige wenige Zentimeter axial nach außen bewegt wird, wenn die Abdeckung 9 im Rückhaltefall zu öffnen ist. Dennoch wird der mittige Teil 38 und damit der mittige Gassackteil 16 an einer freien Bewegung nach außen gehindert, denn eine Einbuchtung 13 bleibt nach wie vor vorhanden.

Wie in den Figuren 2 und 3 zu erkennen ist, ist die Abdeckung 9 eine Zweikomponentenabdeckung, mit einer inneren Tragschicht 60, die auch einstückig in das Modulgehäuse 7 übergeht, und einer außenseitigen Abdeckschicht 62. Der Verstärkungsring 40 wird beim Spritzen der Abdeckung in die Spritzform eingelegt und ist vollständig von Kunststoffumgeben.

## Patentansprüche

1. Gassackmodul, mit
einem Gassack (3) und
einer vorderseitigen Abdeckung (9) aus Kunststoff,
die einen mittigen Teil (38) und eine diesen umgebende, vorgegebene Austrittsöffnung (36) für den Gassack (3) hat, welche in geschlossenem Zustand von einem ringförmigen Teil (32) der Abdeckung (9) umgeben ist, wobei der ringförmige Teil (32) beim Entfalten des Gassacks (3) zur Freigabe der Austrittsöffnung (36) entfernt wird und wobei der mittige Teil (38) so am Modul befestigt ist, daß er beim Entfalten des Gassacks (3) an einer freien Bewegung gehindert wird,
**dadurch gekennzeichnet, daß** ein Verstärkungsring (40) in dem mittigen Teil (38) eingebettet ist und längs des inneren Randes des ringförmigen Teils (32) der Abdeckung (9) angrenzend verläuft und den mittigen Teil (38) modulseitig befestigt und an einer freien Bewegung beim Entfalten des Gassacks (3) hindert.

2. Gassackmodul nach Anspruch 1, **dadurch gekennzeichnet, daß** ein als separates Teil ausgebildetes Emblem (50) vorgesehen ist, das wenigstens einen rückseitigen Befestigungsfortsatz (52) hat, der sich durch den mittigen Teil (38) der Abdeckung (9) und radial einwärts des Verstärkungsrings (40) erstreckt.

3. Gassackmodul nach Anspruch 2, **dadurch gekennzeichnet, daß** der Befestigungsfortsatz (52) nur am Kunststoff des mittigen Teils (38) befestigt ist.

4. Gassackmodul nach Anspruch 3, **dadurch gekennzeichnet, daß** der Befestigungsfortsatz (52) auf der Rückseite des mittigen Teils (38) umgeformt ist.

5. Gassackmodul nach einem der vorhergehenden Ansprüche, **dadurch gekennzeichnet, daß** ein topfförmiger Diffusor (20) im Modul vorgesehen ist, dessen Vorderwand (22) sich zum mittigen Teil (38) der Abdeckung (9) erstreckt, wobei der Verstärkungsring (40) an dem Diffusor (20) befestigt ist.

6. Gassackmodul nach einem der vorhergehenden Ansprüche, **dadurch gekennzeichnet, daß** ein topfförmiger Diffusor (20) im Modul vorgesehen ist, dessen Vorderwand (22) sich zum mittigen Teil (38) der Abdeckung (9) erstreckt, und daß sich der Befestigungsfortsatz (52) durch eine Öffnung im Diffusor (20) erstreckt und an dessen Rückseite umgeformt ist.

7. Gassackmodul nach einem der vorhergehenden Ansprüche, **dadurch gekennzeichnet, daß** der Gassack (3) im aufgeblasenen Zustand eine dem Insassen zugewandte Vorderseite (11) hat, die in eine zentrische Einbuchtung (13) übergeht, welche dadurch gebildet ist, daß ein rückseitig des mittigen Abschnitts (38) verlaufender mittiger Gassackteil (16) an einer freien Bewegung aus dem Modul gehindert wird, so daß eine die Einbuchtung umgebende, mit Gas befüllte Kammer (18) entsteht.

8. Gassackmodul nach Anspruch 7, **dadurch gekennzeichnet, daß** der mittige Gassackteil (16) durch die Befestigung des Verstärkungsrings (40) modulseitig befestigt und an einer freien Bewegung beim Entfalten des Gassacks (3) gehindert wird.

## Claims

1. An airbag module comprising
an airbag (3) and
a front cover (9) which is made of plastic
and has a middle part (38) and, surrounding the latter, a predefined outlet opening (36) for the airbag (3), the outlet opening, in the closed state, being surrounded by a ring-shaped part (32) of the cover (9), the ring-shaped part (32) being removed to expose the outlet opening (36) when the airbag (3) unfolds, and the middle part (38) being attached to the module in such a way that the middle part is prevented from moving freely when the airbag (3) unfolds,
**characterized in that** a reinforcement ring (40) is embedded in the middle part (38) and runs along and adjacent to the inner edge of the ring-shaped part (32) of the cover (9) and attaches the middle part (38) on the module side, preventing it from moving freely when the airbag (3) unfolds.

2. The airbag module according to claim 1, **characterized in that** an emblem (50) is provided, which is made as a separate part and has at least one attachment projection (52) on the rear which extends through the middle part (38) of the cover (9) and radially inwards with respect to the reinforcement ring (40).

3. The airbag module according to claim 2, **characterized in that** the attachment projection (52) is only attached to the plastic of the middle part (38).

4. The airbag module according to claim 3, **characterized in that** the attachment projection (52) is reshaped on the rear of the middle part (38).

5. The airbag module according to any of the preceding claims, **characterized in that** a pot-shaped diffuser (20) is provided in the module, the front wall (22) of the diffuser (20) extending to the middle part (38) of the cover (9), the reinforcement ring (40) being attached to the diffuser (20).

6. The airbag module according to any of the preceding claims, **characterized in that** a pot-shaped diffuser (20) is provided in the module, the front wall (22) of the diffuser (20) extending to the middle part (38) of the cover (9), and that the attachment projection (52) extends through an opening in the diffuser (20) and is reshaped on the rear thereof.

7. The airbag module according to any of the preceding claims, **characterized in that**, in the inflated state, the airbag (3) has a front (11) that faces the occupant and continues into a centric indentation (13) which is formed **in that** a middle airbag part (16) extending on the rear of the middle section (38) is prevented from moving freely out of the module so that a gas-filled chamber (18) surrounding the indentation is produced.

8. The airbag module according to claim 7, **characterized in that**, by the attachment of the reinforcement ring (40), the middle airbag part (16) is attached on the module side and is prevented from moving freely when the airbag (3) unfolds.

## Revendications

1. Module de coussin à gaz comportant
un coussin à gaz (3) et
un couvercle (9) en matière plastique sur le devant,
qui possède une partie médiane (38) et un orifice de sortie (36) entourant celle-ci et prédéterminé pour le coussin à gaz (3), lequel est entouré par une partie annulaire (32) du couvercle (9) à l'état fermé, la partie annulaire (32) étant enlevée lors du déploiement du coussin à gaz (3) pour libérer l'orifice de sortie (36) et la partie médiane (38) étant fixée sur le module de telle sorte qu'elle est empêchée de se déplacer librement lors du déploiement du coussin à gaz (3),
**caractérisé en ce qu'**un anneau de renforcement (40) est encastré dans la partie médiane (38) et s'étend contigu le long du bord intérieur de la partie annulaire (32) du couvercle et fixe la partie médiane (38) du côté du module et l'empêche de se déplacer librement lors du déploiement du coussin à gaz (3).

2. Module de coussin à gaz selon la revendication 1, **caractérisé en ce qu'**il est prévu un emblème (50) réalisé comme pièce séparée qui possède au moins un prolongement de fixation (52) postérieur qui s'étend à travers la partie médiane (38) du couvercle (9) et radialement vers l'intérieur par rapport à l'anneau de renforcement (40).

3. Module de coussin à gaz selon la revendication 2, **caractérisé en ce que** le prolongement de fixation (52) n'est fixé que sur la matière plastique de la partie médiane (38).

4. Module de coussin à gaz selon la revendication 3, **caractérisé en ce que** le prolongement de fixation (52) est façonné sur la face postérieure de la partie médiane (38).

5. Module de coussin à gaz selon l'une des revendications précédentes, **caractérisé en ce qu'**il est prévu dans le module un diffuseur (20) en forme de pot dont la paroi antérieure (22) s'étend vers la partie médiane (38) du couvercle (9), l'anneau de renforcement (40) étant fixé sur le diffuseur (20).

6. Module de coussin à gaz selon l'une des revendications précédentes, **caractérisé en ce qu'**il est prévu dans le module un diffuseur (20) en forme de pot dont la paroi antérieure (22) s'étend vers la partie médiane (38) du couvercle (9), et **en ce que** le prolongement de fixation (52) s'étend à travers une ouverture dans le diffuseur (20) et est façonné sur sa face postérieure.

7. Module de coussin à gaz selon l'une des revendications précédentes, **caractérisé en ce qu'**à l'état gonflé, le coussin à gaz (3) a une face antérieure (11) tournée vers le passager, laquelle se transforme en un creux (13) central qui est formé par le fait qu'une partie de coussin à gaz médiane (16) s'étendant sur la face postérieure du tronçon médian (38) est empêchée de se déplacer librement hors du module, de sorte qu'il se forme une chambre (18) remplie de gaz entourant le creux.

8. Module de coussin à gaz selon la revendication 7, **caractérisé en ce que** la partie médiane (16) du coussin à gaz est fixée du côté du module par la fixation de l'anneau de renforcement et est empêchée de se déplacer librement lors du déploiement du coussin à gaz (3).
